# EUROPEAN PATENT APPLICATION

(11) **EP 2 403 091 A2**
(43) Date of publication of application: **04.01.2012**
(21) Application number: 11171570.2
(22) Date of filing: 27.06.2011
(51) Int. Cl.: H02H 7/06, H02P 9/10

(54) **Circuit breaker with overvoltage protection**

(30) Priority: 30.06.2010 US 826996
(71) Applicant: General Electric Company, Schenectady, NY 12345 (US)
(72) Inventor: Walling, Reigh Allen, Schenectady, NY New York 12345 (US); Larsen, Einar Vaughn, Schenectady, NY New York 12345 (US); Clark, Kara, Schenectady, NY New York 12345 (US)
(74) Representative: Bedford, Grant Richard

(57) **Abstract**

A circuit breaker (434) is provided for protecting dynamoelectric machinery. The circuit breaker includes a feeder input connection (527) connected to a feeder line (426). The feeder line is connected to a dynamoelectric machine. A substation connection (528) is connected to a substation bus (432). An interrupting breaker (530) is connected between the feeder input connection and the substation connection. A shorting switch (520) is connected to the feeder input connection, and an impedance device (510) is connected to the shorting switch and a ground or neutral (446). The impedance device, shorting switch and ground/neutral reduces excessive voltages on the feeder line when the feeder line is isolated from the substation by the circuit breaker, and the impedance device is selected to reduce a torque transient experienced by the dynamoelectric machine.

## Description

Various of the embodiments disclosed herein relate generally to circuit breakers and more particularly to a circuit breaker for protecting electrical equipment from undesired voltages while also protecting rotating machinery, such as dynamoelectric machines, from undesired torsional transients.

Wind farms are becoming increasing popular for the generation of electricity. In a wind farm, there are a large number of wind turbines installed in locations of the country where wind is consistent and substantial. Typically, the wind turbines will include an array of blades that are coupled to a shaft. The rotation of the shaft caused by the rotation of the blades will produce electrical energy. Electrical lines will connect with the energy generator so as to deliver the energy from a particular wind turbine to a feeder line. The electrical energy from the various wind turbines in the wind farm can collectively pass energy to a substation via the feeder line.

Typically, these wind turbines can each produce between about 1.5 MW and 3.0 MW of power. The outputs of multiple wind turbines in the wind farm are often grouped into several electrical collection circuits or feeder lines. Transformers are used so as to tie the wind turbine output to the feeder line. The transformers serve to step up the output voltage of the wind turbines to a medium voltage, usually 34.5 kilovolts. The various wind turbines in a wind farm are usually paralleled into feeder lines that can deliver about 15 to 30 megawatts of power. In view of the voltage which has been stepped up to the 34.5 kilovolts, each feeder line will require a circuit breaker rated at a minimum 34.5 kilovolts capacity. The energy will pass through the circuit breaker to the 34.5 kV bus of a substation. The 34.5 kV substation bus will go into one or more main step-up transformers and then tie into a high voltage utility line or power grid, therefore it would be desirable to have a device that can interrupt the circuit if a fault occurs on the power grid

The interruption of electrical power circuits has always been an essential function, especially in cases of overloads or short circuits, when immediate interruption of the current flow becomes necessary as a protective measure. In the past, circuits could be broken only by separation of contacts in air followed by drawing the resulting electric arc out to such a length that it could no longer be maintained. This means of interruption soon became inadequate and special devices, termed "circuit breakers", were developed. The basic problem is to control and quench the high power arc. This necessarily occurs at the separating contacts of a breaker when opening high current circuits. Since arcs generate a great deal of heat energy which is often destructive to the breaker's contacts, it is necessary to limit the duration of the arc and to develop contacts that can repeatedly withstand the effect of the arc.

A vacuum circuit breaker uses the rapid dielectric recovery and high dielectric strength of a vacuum. A pair of contacts are hermetically sealed in the vacuum envelope. An actuating motion is transmitted through bellows to a movable contact. When the electrodes are parted, an arc is produced and supported by metallic vapor boiled from the electrodes. Vapor particles expand into the vacuum and condense on solid surfaces. At a natural current zero the vapor particles disappear and the arc is extinguished.

In the past, in association with such wind farms, when circuit breakers are opened, the feeder line current would be interrupted and a temporary overvoltage situation could occur in the feeder line. This overvoltage situation can be caused by isolation of the feeder line from equipment that normally provide a reference point for the phase voltages with respect to ground potential. A short-circuit between one of the phases and ground on the feeder line will cause the voltage on that phase with respect to ground to drop to near zero, and the voltage with respect to ground on the other two phases to rise to the normal phase-to-phase value, which is about 1.73 times the normal phase-to-ground value. This overvoltage can damage equipment connected to the feeder line. Isolation of the operating wind turbines from the grid can also result in other overvoltage phenomena. The high transient voltage in the feeder line will "back up" through the circuit and to the electronics associated with the wind turbine generators. As a result, this transient overvoltage could cause damage to the circuitry or machinery associated with the wind turbines and other circuitry throughout the system. As a result, in view of the characteristics of the large energy resident within the overall wind farm, there is a need to hold within acceptable limits any overvoltage which occurs when the circuit breaker is be opened.

Typically, to avoid the over voltage situation, grounding transformers have been required to be installed. These grounding transformers would typically have a zig-zag winding or a grounded wye primary winding and either an open or closed delta with a secondary winding. If an open delta secondary winding is used, the delta is closed by an external resistor or inductor. The primary voltage of the transformer is consistent with the nominal voltage of the feeder line, typically 34.5 kV. The secondary voltage, where an open or closed delta is used, is arbitrary with regard to the application needs. This voltage is typically chosen to optimize the transformer design, or the selection of the external resistor or inductor if an open-delta secondary is used. The transformer has a core with windings therearound. In view of the core and windings, there is a continuous amount of core losses of energy associated with the use of such grounding transformers. Over time, the core losses could amount to a significant dollar amount of lost energy. Additionally, these grounding transformers have a relatively high initial cost, installation cost, and a long lead time for delivery.

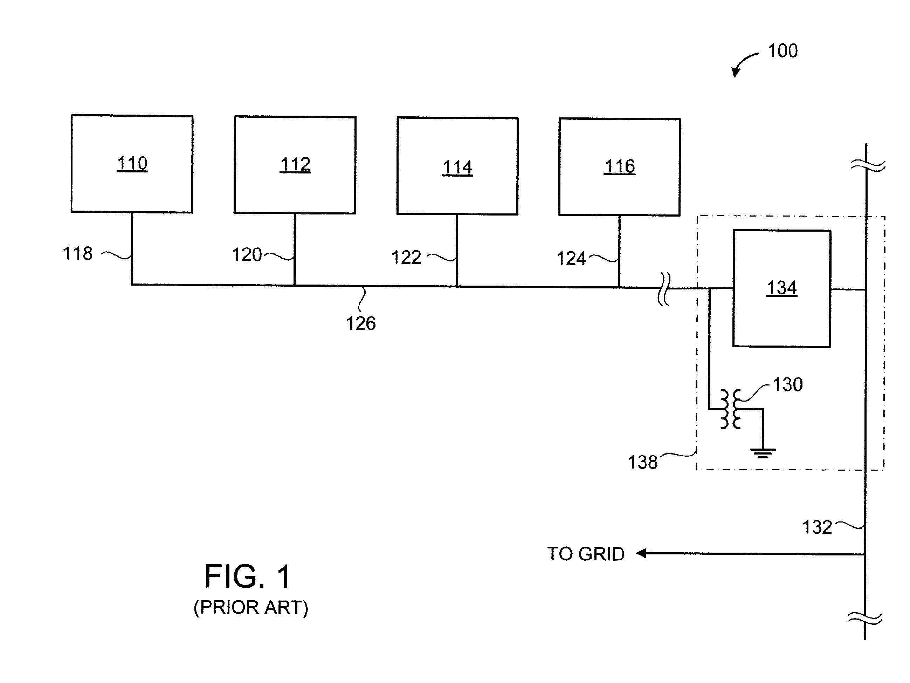

FIG. 1 is an illustration of a system 100 employing a ground transformer. Wind turbines 110, 112, 114 and 116 are connected by lines 118, 120, 122 and 124 to a feeder line 126. The feeder line 126 is connected to a grounding transformer 130. The grounding transformer 130 and circuit breaker 134 can be configured to be part of substation 138. The substation 138 can be connected to the grid via line 132. When the circuit breaker 134 is activated so as to open the circuit, energy in the feeder 126 is passed to the ground transformer 130. The ground transformer 130 presents a small impedance to any common-mode, or zero phase sequence, voltage on feeder line 126, and provides a ground reference to the voltages generated in the subsystem composed of the wind turbines 110, 112, 114, and 116 and lines 118, 120, 122, 124, and 126. This reduces the elevation of unfaulted phase voltage with respect to ground if one of the phases is short-circuited to ground. When the ground transformer 130 is effectively used, any over voltages caused by isolation of the subsystem from the ground reference normally provided by substation 138 are reduced to a tolerable level. However, ground transformers 130 are expensive and one ground transformer is required for each feeder line.

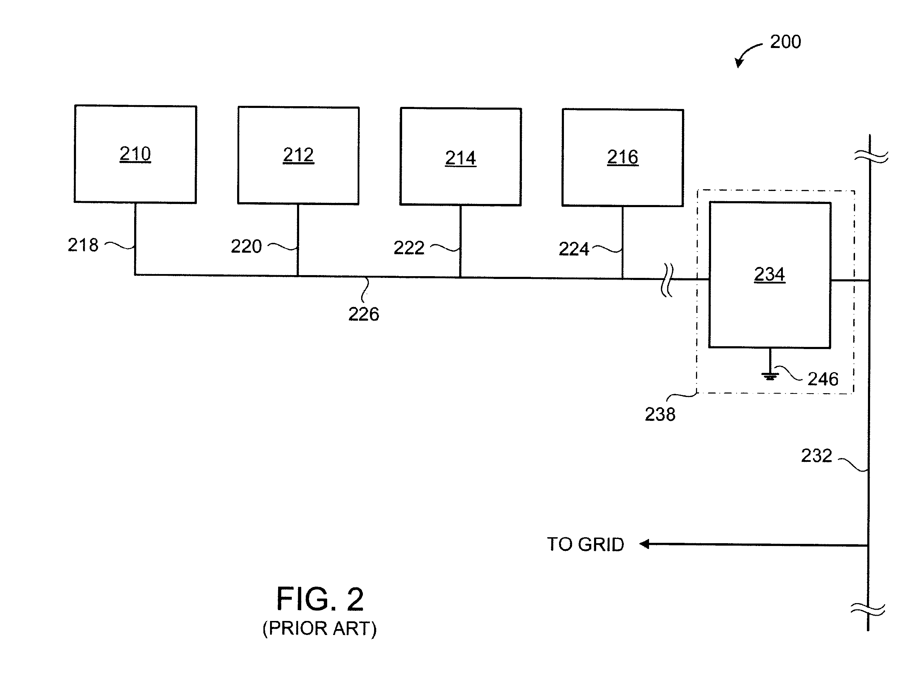

A lower cost approach is favored by some wind farm owners/operators, and this approach is illustrated in FIG. 2. FIG. 2 is an illustration of a system 200 that eliminates the need for grounding transformers by incorporating a grounding switch in the circuit breaker connected to each feeder line 226. As can be seen, wind turbines 210, 212, 214 and 216 are connected by lines 218, 220, 222 and 224 to a feeder line 226. The feeder line is connected to a circuit breaker 234 in substation 238. In normal operation energy generated by the wind turbines is transmitted via feeder line 226 through circuit breaker 234 and line 232 to the grid. Circuit breaker 234 includes a connection to ground 246.

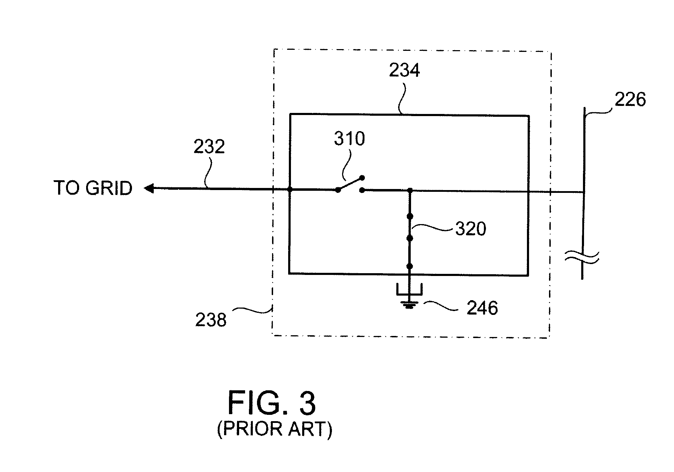

FIG. 3 illustrates a simplified circuit diagram of a switch that is used in circuit breaker 234. A normally closed switch 310 is connected between feeder line 226 and grid connection line 232. A normally open switch 320 is connected between the feeder line 226 and ground 246. During normal operation, power is transferred from feeder line 226, through switch 310 and substation 238 to the power grid. In the event of a fault condition or other event switch 310 can be opened and switch 320 closed (as shown). In this configuration the feeder line 226 is tied to ground 246. However, when the feeder line 226 is suddenly tied to ground the individual wind turbines can experience a torque transient condition. The torque transient condition can be caused by the sudden application of a short circuit on the electrical generators in the wind turbines. The torque transient can be particularly severe if the initiating event that causes the switch 310 to open is a fault, and the initial fault establishes flux levels in the generators that interact with the short-circuit currents in the generator caused by subsequent closing of switch 320. In some cases the result is a significant torque transient that could damage wind turbines.

According to one aspect of the present invention, a circuit breaker is provided for protecting dynamoelectric machinery. The circuit breaker includes a feeder input connection connected to a feeder line. The feeder line is connected to a dynamoelectric machine. A substation connection is connected to a substation bus. An interrupting breaker is connected between the feeder input connection and the substation connection. A shorting switch is connected to the feeder input connection, and an impedance device is connected to the shorting switch and a ground or neutral. The impedance device, shorting switch and ground or neutral can reduce excessive voltages on the feeder line when the feeder line is isolated from the substation by the circuit breaker, and the impedance device is selected to reduce a torque transient experienced by the dynamoelectric machine.

According to another aspect of the present invention, a substation having a circuit breaker is provided for protecting dynamoelectric machinery. The substation includes a feeder input connection connected to a feeder line. The feeder line is connected to a dynamoelectric machine. A substation connection is connected to a substation bus. An interrupting breaker is connected between the feeder input connection and the substation connection. A shorting switch is connected to the feeder input connection, and an impedance device is connected to the shorting switch and a ground or neutral. The impedance device, shorting switch and ground or neutral reduces excessive voltages on the feeder line when the feeder line is isolated from the substation by the circuit breaker, and the impedance device is selected to reduce a torque transient experienced by the dynamoelectric machine.

According to a still further aspect of the present invention, a circuit breaker is provided for protecting dynamoelectric machinery. The circuit breaker includes a feeder input connection connected to a feeder line. The feeder line is connected to a dynamoelectric machine. A substation connection is connected to a substation bus. An interrupting breaker is connected between the feeder input connection and the substation connection. A shorting switch is connected to the feeder input connection, and an impedance device is connected to the shorting switch and a ground or neutral. The impedance device, shorting switch and ground/neutral reduces excessive voltages on the feeder line when the feeder line is isolated from the substation by the circuit breaker, and the impedance device is selected to reduce a torque transient experienced by the dynamoelectric machine. The dynamoelectric machine may be a wind turbine, an electrical generator and/or a motor.

Various aspects and embodiments of the present invention will now be described in connection with the accompanying drawings, in which:
FIG. 1 illustrates a block diagram of a circuit breaker system;
FIG. 2 illustrates a block diagram of another circuit breaker system;
FIG. 3 illustrates a simplified schematic diagram of a switch used in the circuit breaker system of FIG. 2;
FIG. 4 illustrates a block diagram of a circuit breaker system, according to one aspect of the present invention;
FIG. 5 illustrates a block diagram and simplified circuit schematic of a circuit breaker system, according to one aspect of the present invention.

In circuit breakers, the circuit to the substation can be broken upon the application of a manual force to a button or lever of the circuit breaker or by an automatic relay which opens the circuit. Typically, the current is measured to the substation. If any relay senses a problem, then a signal is transmitted to the circuit breaker so as to open the breaker. Typically, the relays will be maintained within the substation. The opening of the circuit breaker will prevent the energy from being transmitted from the feeder line to the substation. Sometimes, the circuit breaker is open so as to allow maintenance personnel to work on the wind farm system, on the circuit breaker, or on the substation. Typically, the relays will operate if the sensors sense an excessive amount of current, or a component of current having a common-mode component indicative of a fault to ground.

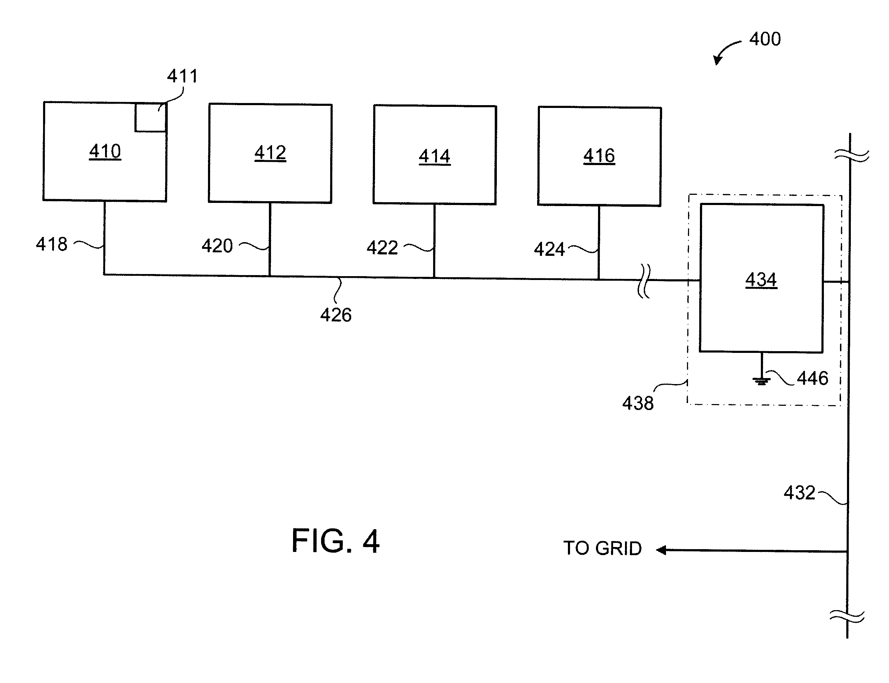

FIG. 4 illustrates a simplified circuit diagram of a system 400 that can be used to protect dynamoelectric machines from overvoltage and or torque transient conditions. Dynamoelectric machines 410, 412, 414 and 416 are connected by lines 418, 420, 422 and 424 to a feeder line 426. The dynamoelectric machines can include, but are not limited to, wind turbines, generators, motors, or any rotating electric machine. For example, a wind turbine can include a generator 411, which may be of the squirrel cage, induction, doubly fed induction, multiphase induction or permanent magnet type. In the wind turbine and generator examples, the generators can include squirrel cage generators, induction generators, doubly fed induction generators, multiphase induction generators or permanent magnet generators, as well as any other suitable type of generator.

The feeder line 426 is connected to a circuit breaker 434 and substation 438. In normal operation, energy generated by the dynamoelectric machines is transmitted via feeder line 426 through circuit breaker 434 and substation 438, then through line 432 to the power grid. Line 432 can be referred to as a substation bus. Circuit breaker 434 includes a connection to ground 446.

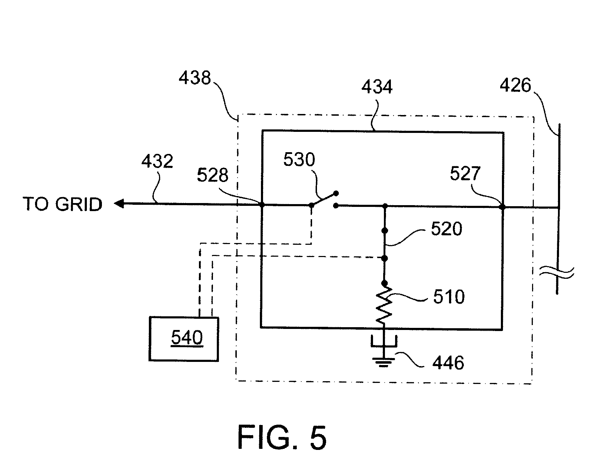

FIG. 5 illustrates a simplified circuit diagram of a portion of the circuit breaker 434, according to an aspect of the present invention. The circuit breaker 434 includes at least one feeder input connection 527 and at least one output, substation or substation bus connection 528. An electrical impedance 510, either resistance, reactance, or both, is added to the shorting circuit of circuit breaker 434. An electrical shorting switch 520 is connected mechanically and/or electrically to an electrical interrupting breaker 530. The electrical shorting switch 520 can be mechanically and/or electrically linked to, and operated by the same actuator 540 as, the interrupting breaker 530. The design is such that the shorting switch 520 connects one or more electrical phases of the feeder side of the interrupting breaker 530 to an impedance 510, and this impedance 510 is thence connected to ground 446 or the electrical system's neutral. In a three-phase system, each phase may have a shorting switch to connect to ground or neutral. However the torque-limiting impedance may only be in one or two of the three phases, or all three phases as desired in the specific application. The system can be used as the circuit breaker between a substation bus 432 and a feeder 426 that connects one or more individual dynamoelectric machines (e.g., generators, wind turbines, etc.). In one example, these generators are wind turbine generators. The system can be used as both a circuit breaker 434 used to switch and isolate the feeder 426, and as a shorting switch to ensure that excessive overvoltages are not developed when the feeder 426 is isolated with the generators continuing to energize the feeder 426. One purpose of the system is to impose an impedance to load or ground the phases of the feeder 426, such that overvoltages do not occur. The impedances are chosen so that the act of closing the feeder 426 into the impedance 510 does not cause an excessive electrical or mechanical stress to the generators or the electrical system.

The electrical interrupting circuit (530, 520) could be a vacuum interrupter switch, a sulfur hexafluoride interrupter switch or any other suitable interrupting and switching device. The electrical shorting switch 520 is designed to be capable of handling fault current connected to the feeder side of circuit breaker 434. The actuator 540 in common to the interrupting breaker 530 and shorting switch 520 maintains the shorting switch 520 open when interrupting breaker 530 is closed. Conversely, when interrupting breaker 530 is opened, shorting switch 520 is closed with a minimum of delay time after electrical circuit interruption is accomplished by interrupting breaker 530. The impedance 510 is connected between the shorting switch 520 and ground 446 or system electrical neutral.

The circuit breaker 434 operates as a combination of electrical circuit breaker and shorting, or "crowbar" device. When the interrupting contacts in the interrupting breaker 530 are opened, as for example, when an electrical fault is detected on the feeder 426, the shorting switch 520 closes and inserts the impedance 510 to load the circuit and provide a ground reference. The value for impedance 510, which may be resistive or reactive, is chosen to be sufficiently small such that voltages on the feeder are not excessive when the feeder is isolated from the substation 438 by interrupting breaker 530, particularly voltages on an unfaulted phase when one phase is faulted to ground, but sufficiently large such that the torque transient placed on the generators (410 - 416) by the shorting action is acceptable. In other words, the impedance value is selected to reduce excessive voltages on the feeder line, and to reduce torque transients experienced by the dynamoelectric machines.

The actuator 540 can be any suitable actuating device (electrical and/or mechanical) that controls the "ON" and "OFF" state of switches 520 and 530. The actuator can be mechanically and/or electrically connected to the switches 520 and 530. In addition, the connection between the actuator 540 and switches 520, 530 can be implemented via wired or wireless communication.

While the invention has been described in connection with what is presently considered to be one of the most practical and preferred embodiments, it is to be understood that the invention is not to be limited to the disclosed embodiments, but on the contrary, is intended to cover various modifications and equivalent arrangements included within the spirit and scope of the appended claims.

Various aspects and embodiments of the present invention are defined by the following numbered clauses:
1. A circuit breaker for protecting dynamoelectric machinery, the circuit breaker comprising:
   at least one feeder input connection, the at least one feeder input connection connected to a feeder line, the feeder line connected to at least one dynamoelectric machine;
   at least one substation connection configured for connection to a substation bus;
   at least one interrupting breaker connected between the at least one feeder input connection and the at least one substation connection;
   at least one shorting switch connected to the at least one feeder input connection;
   at least one impedance device connected to the at least one shorting switch and at least one of a ground and neutral;
      wherein, the at least one impedance device can reduce excessive voltages on the feeder line when the feeder line is isolated from a substation by the circuit breaker, and the at least one impedance device is selected to reduce a torque transient experienced by the at least one dynamoelectric machine.
2. The circuit breaker of clause 1, the at least one dynamoelectric machine comprising one or more of:
   a wind turbine, an electrical generator and a motor.
3. The circuit breaker of any preceding clause, where the at least one dynamoelectric machine comprises an electrical generator, the electrical generator comprising one or more of:
   a squirrel cage generator, an induction generator, a doubly fed induction generator, a multiphase induction generator, and a permanent magnet generator.
4. The circuit breaker of any preceding clause, wherein the substation bus is connected to an electrical transmission grid.
5. The circuit breaker of any preceding clause, the at least one interrupting breaker comprising one or more of:
   a vacuum interrupter switch and a sulfur hexafluoride switch.
6. The circuit breaker of any preceding clause, the at least one shorting switch comprising one or more of:
   a vacuum interrupter switch and a sulfur hexafluoride switch.
7. The circuit breaker of any preceding clause, the at least one impedance device comprising one or more of:
   a resistance and a reactance.
8. The circuit breaker of any preceding clause, further comprising:
   at least one actuator for controlling operation of the at least one interrupting breaker and the at least one shorting switch.
9. A substation having a circuit breaker for protecting dynamoelectric machinery, the substation comprising:
   at least one feeder input connection, the at least one feeder input connection connected to a feeder line, the feeder line connected to at least one dynamoelectric machine;
   at least one substation connection configured for connection to a substation bus;
   at least one interrupting breaker connected between the at least one feeder input connection and the at least one substation connection;
   at least one shorting switch connected to the at least one feeder input connection;
   at least one impedance device connected to the at least one shorting switch and at least one of a ground and neutral;
      wherein, the at least one impedance device, at least one shorting device and ground or neutral combine to reduce excessive voltages on the feeder line when the feeder line is isolated from the substation by the circuit breaker, and the at least one impedance device is selected to reduce a torque transient experienced by the at least one dynamoelectric machine.
10. The substation of any preceding clause, the at least one dynamoelectric machine comprising one or more of:
   a wind turbine, an electrical generator and a motor.
11. The substation of any preceding clause, where the at least one dynamoelectric machine comprises an electrical generator, the electrical generator comprising one or more of:
   a squirrel cage generator, an induction generator, a doubly fed induction generator, a multiphase induction generator, and a permanent magnet generator.
12. The substation of any preceding clause, wherein the substation bus is connected to an electrical transmission grid.
13. The substation of any preceding clause, the at least one interrupting breaker comprising one or more of:
   a vacuum interrupter switch and a sulfur hexafluoride switch.
14. The substation of any preceding clause, the at least one shorting switch comprising one or more of:
   a vacuum interrupter switch and a sulfur hexafluoride switch.
15. The substation of any preceding clause, the at least one impedance device comprising one or more of:
   a resistance and a reactance.
16. The circuit breaker of any preceding clause, further comprising:
   at least one actuator for controlling operation of the at least one interrupting breaker and the at least one shorting switch.
17. A circuit breaker for protecting dynamoelectric machinery, the circuit breaker comprising:
   at least one feeder input connection, the at least one feeder input connection connected to a feeder line, the feeder line connected to at least one dynamoelectric machine;
   at least one substation connection configured for connection to a substation bus;
   at least one interrupting breaker connected between the at least one feeder input connection and the at least one substation connection;
   at least one shorting switch connected to the at least one feeder input connection;
   at least one impedance device connected to the at least one shorting switch and at least one of a ground and neutral;
      wherein, the dynamoelectric machine is chosen from one or more of a wind turbine, an electrical generator and a motor, and the at least one impedance device connected to the at least one shorting switch and at least one of the ground and neutral can reduce excessive voltages on the feeder line when the feeder line is isolated from a substation by the circuit breaker, and the at least one impedance device is selected to reduce a torque transient experienced by the at least one dynamoelectric machine.
18. The circuit breaker of any preceding clause, where the dynamoelectric machine is an electrical generator, the electrical generator comprising one or more of:
   a squirrel cage generator, an induction generator, a doubly fed induction generator, a multiphase induction generator, and a permanent magnet generator.
19. The circuit breaker of any preceding clause, at least one of the at least one interrupting breaker and the at least one shorting switch comprising one or more of:
   a vacuum interrupter switch and a sulfur hexafluoride switch.
20. The circuit breaker of any preceding clause, the at least one impedance device comprising one or more of:
   a resistance and a reactance.

## Claims

1. A circuit breaker (434) for protecting dynamoelectric machinery (410-416), the circuit breaker comprising:
at least one feeder input connection (527), the at least one feeder input connection connected to a feeder line (426), the feeder line connected to at least one dynamoelectric machine;
at least one substation connection (528) configured for connection to a substation bus (432);
at least one interrupting breaker (530) connected between the at least one feeder input connection and the at least one substation connection;
at least one shorting switch (520) connected to the at least one feeder input connection;
at least one impedance device (510) connected to the at least one shorting switch and at least one of a ground and neutral (446);
wherein, the at least one impedance device can reduce excessive voltages on the feeder line when the feeder line is isolated from a substation by the circuit breaker, and the at least one impedance device is selected to reduce a torque transient experienced by the at least one dynamoelectric machine.

2. The circuit breaker (434) of claim 1, the at least one dynamoelectric machine comprising one or more of:
a wind turbine, an electrical generator and a motor.

3. The circuit breaker (434) of any preceding claim, where the at least one dynamoelectric machine comprises an electrical generator (411), the electrical generator comprising one or more of:
a squirrel cage generator, an induction generator, a doubly fed induction generator, a multiphase induction generator, and a permanent magnet generator.

4. The circuit breaker (434) of any preceding claim, wherein the substation bus is connected to an electrical transmission grid.

5. The circuit breaker (434) of any preceding claim, the at least one interrupting breaker comprising one or more of:
a vacuum interrupter switch and a sulfur hexafluoride switch.

6. The circuit breaker (434) of any preceding claim, the at least one shorting switch comprising one or more of:
a vacuum interrupter switch and a sulfur hexafluoride switch.

7. The circuit breaker (434) of any preceding claim, the at least one impedance device comprising one or more of:
a resistance and a reactance.

8. The circuit breaker (434) of any preceding claim, further comprising:
at least one actuator (540) for controlling operation of the at least one interrupting breaker and the at least one shorting switch.

9. A substation (438) having a circuit breaker (434) for protecting dynamoelectric machinery, the substation comprising:
at least one feeder input connection (527), the at least one feeder input connection connected to a feeder line (426), the feeder line connected to at least one dynamoelectric machine (410);
at least one substation connection (528) configured for connection to a substation bus (432);
at least one interrupting breaker (530) connected between the at least one feeder input connection and the at least one substation connection;
at least one shorting switch (520) connected to the at least one feeder input connection;
at least one impedance device (510) connected to the at least one shorting switch and at least one of a ground and neutral;
wherein, the at least one impedance device, at least one shorting device and ground or neutral combine to reduce excessive voltages on the feeder line when the feeder line is isolated from the substation by the circuit breaker, and the at least one impedance device is selected to reduce a torque transient experienced by the at least one dynamoelectric machine.

10. The substation (438) of claim 9, the at least one dynamoelectric machine comprising one or more of:
a wind turbine, an electrical generator and a motor.
